# EUROPÄISCHE PATENTANMELDUNG

(11) **EP 4 133 937 A1**
(43) Veröffentlichungstag der Anmeldung: **15.02.2023**
(21) Anmeldenummer: 21191116.9
(22) Anmeldetag: 12.08.2021
(51) Int. Cl.: A01K 29/00, G01B 7/02

(54) **HALSBAND FÜR RINDER UND VERFAHREN ZUM ÜBERWACHEN DES WACHSTUMS EINES RINDS**

(71) Anmelder: Förster Technik GmbH, 78234 Engen (DE)
(72) Erfinder:
(74) Vertreter: Patentanwälte und Rechtsanwalt Weiß, Arat & Partner mbB

(57) **Zusammenfassung**

Ein Halsband (1) für Rinder soll ein im Wesentlichen dehnstarres Gurtband (2) sowie ein Kraftspeicherelement (8) umfassen, welches mit dem Gurtband (2) verbunden ist, wobei das Kraftspeicherelement (8) eingerichtet ist, einer Vergrösserung eines Halsband-Umfangs entgegenzuwirken.

## Beschreibung

### Technisches Gebiet

Die Erfindung betrifft ein Halsband für Rinder und ein Verfahren zum Überwachen des Wachstums eines Rinds gemäss den unabhängigen Ansprüchen.

### Stand der Technik

Halsbänder für Rinder sind bekannt. Bei Kälbern und Jungrindern müssen diese während der Wachstumsphase häufig manuell geweitet werden. Teilweise werden Kälbern und Jungrindern die Halsbänder zu weit, also mit viel Spiel angelegt, um das Band nicht so häufig weiten zu müssen. Allerdings bleiben die Rinder dann oftmals mit dem zu weiten Halsband an Hindernissen hängen oder streifen das Halsband absichtlich ab.

Das Erfassen des Wachstums eines Rinds, insbesondere von Jungrindern und Kälbern erfolgt im Stand der Technik häufig durch Wiegen des Rinds oder durch Beobachtung der Nahrungsaufnahme, d.h. des Fress- und Trinkverhaltens.

### Aufgabe der Erfindung

Die Aufgabe der vorliegenden Erfindung ist es, die Nachteile aus dem Stand der Technik zu überwinden. Insbesondere sollen ein verbessertes Halsband sowie ein einfaches Verfahren zum Überwachen des Wachstums bereitgestellt werden.

### Lösung der Aufgabe

Zur Lösung der Aufgabe führen die Gegenstände der unabhängigen Ansprüche. Vorteilhafte Ausgestaltungen sind in den Unteransprüchen beschrieben.

Ein erfindungsgemässes Halsband für Rinder umfasst ein im Wesentlichen dehnstarres Gurtband sowie ein Kraftspeicherelement, welches mit dem Gurtband verbunden ist. Das Kraftspeicherelement ist eingerichtet, einer Vergrösserung eines Halsband-Umfangs entgegenzuwirken. Das Kraftspeicherelement ist vorzugsweise eingerichtet, eine Kraft auf das Gurtband auszuüben, die eine Verkleinerung des Halsband-Umfangs bewirkt.

In Gebrauchslage, d.h. wenn das Halsband am Hals eines Rinds befestigt ist, macht das Gurtband vorzugsweise mehr als 50%, noch bevorzugter mehr als 70% und noch bevorzugter mehr als 80% des Halsband-Umfangs aus.

In Gebrauchslage, wenn das Gurtband am Hals des Rinds anliegt, ist es vorzugsweise im Wesentlichen kreisförmig und genau einmal um den Hals geschlungen.

Das Kraftspeicherelement kann beispielsweise eine Feder sein. Federn erlauben beispielsweise eine reversible Längenänderung. Als Bestandteil des erfindungsgemässen Halsbands kann die Feder daher eine reversible Änderung des Halsband-Umfangs erlauben. Kommt keine Feder als Kraftspeicherelement zum Einsatz, so soll sich das Kraftspeicherelement dennoch vorzugsweise in gleicher Weise reversibel verhalten wie eine Feder. Das Kraftspeicherelement kann beispielsweise eine Drehfeder sein. Bauartabhängig können auch andere Feder-Typen in Betracht kommen.

Das Kraftspeicherelement kann in einem Gehäuse sitzen. Ein erstes Ende des Gurtbands kann mit dem Kraftspeicherelement verbunden sein und ein zweites Ende des Gurtbands kann mit dem Gehäuse verbunden sein. Je grösser ein im Gehäuse befindlicher Abschnitt des Gurtbands ist, desto kleiner ist der Umfang des Halsbands.

Wie nachstehend im Hinblick auf die verschiedenen Ausführungsformen noch näher erläutert wird, kann das Kraftspeicherelement beispielsweise Bestandteil eines Kraftmessers oder eines Gurtaufrollers sein. Das Kraftspeicherelement kann beispielsweise dazu dienen, das Gurtband aufzurollen und zu gewährleisten, dass das Halsband stets eng am Hals des Rinds anliegt. Das Kraftspeicherelement kann alternativ oder zusätzlich eingerichtet sein, eine auf das Gurtband wirkende Kraft zu erfassen.

Bei Ausführungsformen des Halsbands mit einem Kraftmesser ist eine Länge des Gurtbands und somit ein Umfang des Halsbands vorzugsweise manuell veränderbar, indem beispielsweise eine gürtelähnliche Schnalle händisch verstellt wird. Es kann alternativ an sämtliche aus dem Stand der Technik bekannte Verstelleinrichtungen für Halsbänder gedacht sein.

Ist im Rahmen der vorliegenden Erfindung von einer Länge des Gurtbands die Rede, so ist stets eine wirksame Länge, bspw. ausserhalb des Gehäuses gemeint. Die Länge des Gurtbands bezieht sich also auf den Abschnitt des Gurtbands, welcher am Hals des Rinds anliegt und sich nicht bspw. eingezogen oder aufgerollt im Gehäuse befindet.

Bei Ausführungsformen des Halsbands mit einem Gurtaufroller erfordert eine Änderung der Länge des um den Hals des Rinds geschlungenen Gurtbands und somit Änderung des Halsband-Umfangs vorzugsweise kein manuelles Eingreifen durch einen Benutzer.

Rinder sind im Rahmen der vorliegenden Erfindung auch Jungrinder und Kälber. Der Einfachheit halber wird im Rahmen der vorliegenden Anmeldung dennoch stets von Rindern gesprochen. Wie nachstehend ausführlich erläutert wird, kommt das erfindungsgemässe Halsband vor allem bei schnell wachsenden Rindern, insbesondere also bei den vorgenannten Jungrindern und Kälbern zum Einsatz.

Im Rahmen der vorliegenden Erfindung wird ein Gurtband als im Wesentlichen dehnstarr betrachtet, wenn es sich im Betrieb nicht signifikant dehnt. Diese Dehnung ist hierbei vorzugsweise stets auf die Längsrichtung bezogen. Das im Wesentlichen dehnstarre Gurtband ist vorzugsweise nicht elastisch und besteht vorzugsweise nicht aus einem Elastomer.

Allgemein gilt: Trägt ein Rind während des Wachstums ein dehnstarres, also nicht elastisches Halsband, so übt der wachsende Hals eine radial von innen auf das Halsband wirkende Kraft aus, sobald der Halsumfang dem Umfang des Halsbands entspricht.

Ein Gurtband kann im Rahmen der vorliegenden Erfindung als im Wesentlichen dehnstarr betrachtet werden, wenn es durch die vorbeschriebene radial wirkende Kraft nicht oder jedenfalls nicht signifikant gedehnt wird. Ob dies der Fall ist, hängt beim vorliegenden Halsband nicht nur von der Beschaffenheit des Gurtbands, sondern auch von der Beschaffenheit des Kraftspeicherelements ab. Ist das Gurtband im Wesentlichen dehnstarr, so nimmt zwangsweise das Kraftspeicherelement die radial wirkende Kraft auf. Bei dem erfindungsgemässen Halsband bestimmt also nicht allein eine Steifigkeit des Gurtbands, sondern auch eine Beschaffenheit des Kraftspeicherelements, insbesondere also auch dessen Steifigkeit, ob das Gurtband in Betrieb als dehnstarr angesehen werden kann.

Wie bereits erwähnt arbeitet das Kraftspeicherelement vorzugsweise reversibel. Nach Wegnahme der radial wirkenden Kraft geht das Kraftspeicherelement vorzugsweise in einen entspannten Zustand über, kann aber jederzeit eine erneut auftretende radial wirkende Kraft aufnehmen.

Die Steifigkeit des Gurtbands meint in der Regel dessen Dehnsteifigkeit, also das Produkt aus seinem Elastizitätsmodul in Belastungsrichtung und seiner Querschnittsfläche orthogonal zur Belastungsrichtung. Dies gilt beispielsweise, wenn als Gurtband des Halsbands ein von PKW-Sicherheitsgurten her bekanntes Gurtband verwendet wird. Die Belastungsrichtung ist hierbei die Längsrichtung des Gurtbands. Abhängig von der konkreten Bauform des Gurtbands können aber auch andere Steifigkeiten relevant sein. Wenn im Folgenden von Steifigkeit die Rede ist, so ist vornehmlich die Dehnsteifigkeit und nur in Ausnahmefällen eine andere Steifigkeit gemeint.

Für die Steifigkeit des Kraftspeicherelements gelten analoge Überlegungen. Abhängig von der Beschaffenheit des Kraftspeicherelements sowie von dessen Bauart und dessen Anordnung im Halsband kann es neben der Dehnsteifigkeit beispielsweise auch auf die Schubsteifigkeit, die Biegesteifigkeit oder die Torsionssteifigkeit ankommen. Je nach Bauart kann auch die Federkonstante anstatt einer der genannten Steifigkeiten herangezogen werden.

Die Kraft, welche der Hals des wachsenden Rinds auf das Halsband überträgt, wird von dessen Komponenten, also insbesondere vom Gurtband und vom Kraftspeicherelement aufgenommen. Die Steifigkeit des Gurtbands sollte so hoch gewählt werden, dass der wachsende Hals des Rinds keine signifikante Dehnung des Gurtbands bewirkt. Gleichzeitig sollte das Kraftspeicherelement so beschaffen sein, dass es die beim Wachstum vom Hals auf das Gurtband übertragene Kraft im Wesentlichen vollständig aufnimmt, beispielsweise also eine entsprechend niedrige Steifigkeit aufweist. Die Steifigkeit des Kraftspeicherelements sollte hierbei so gewählt sein, dass das Halsband im Betrieb eng am Hals des Rinds anliegt, diesen aber beim Wachstum nicht einschnürt.

Im Lichte der vorstehenden Überlegungen kann der Fachmann Gurtbänder mit passender Steifigkeit, insbesondere passender Dehnsteifigkeit und passende Kraftspeicherelemente auswählen oder im Wege des Versuchs ermitteln.

Wie bereits erwähnt, berechnet sich die Dehnsteifigkeit als Produkt aus dem Elastizitätsmodul in Längs- bzw. Belastungsrichtung und dem Querschnitt orthogonal zur Belastungsrichtung. Um den Querschnitt und somit das Gewicht und die Ausmasse des Gurtbands möglichst gering zu halten, ist das Gurtband zweckmässigerweise aus einem Werkstoff mit möglichst hohem Elastizitätsmodul in Längsrichtung zu fertigen.

Gurtbänder, welche für PKW-Sicherheitsgurte verwendet werden, weisen einen hohen Elastizitätsmodul in Längsrichtung auf und sind als Gurtband für das erfindungsgemässe Halsband geeignet.

Anhand der vorstehenden Überlegungen ist leicht ersichtlich, dass die Steifigkeit und somit insbesondere der Elastizitätsmodul in Längsrichtung des Gurtbands beliebig hoch sein können. Es können beliebig dehnstarre Gurtbänder bis hin zu vollständig dehnstarren Gurtbändern verwendet werden. Wie die bei PKW-Sicherheitsgurten zur Anwendung kommenden Gurtbänder sollte auch das im erfindungsgemässen Halsband eingesetzte Gurtband natürlich nicht biegestarr, sondern biegsam sein.

Während für die Steifigkeit und angesichts der vorstehenden Überlegungen somit insbesondere für den Elastizitätsmodul in Längsrichtung des Gurtbands keine Obergrenze existiert, sollte sich die Steifigkeit des Kraftspeicherelements zwischen einer Unter- und einer Obergrenze bewegen. Die Untergrenze sollte hierbei so gewählt sein, dass das Halsband stets eng am Hals des Rinds anliegt, dort also kein zu grosses Spiel vorliegt. Die Obergrenze sollte so gewählt sein, dass das Halsband den Hals des Rinds nicht einschnürt.

Die konkrete Steifigkeit des Kraftspeicherelements sollte hierbei abhängig von der Steifigkeit des Gurtbands gewählt werden, um die vorgenannten Voraussetzungen zu erfüllen. Insbesondere bei einem Gurtband mit eher niedriger Steifigkeit, welches gerade noch als dehnstarr angesehen werden kann, sollte die Steifigkeit des Kraftspeicherelements auch entsprechend niedrig gewählt sein. So wird sichergestellt, dass die vom Hals des Rinds auf das Halsband übertragene Kraft im Wesentlichen allein vom Kraftspeicherelement aufgenommen wird, und das Gurtband im Betrieb als im Wesentlichen dehnstarr angesehen werden kann.

Wie bereits erwähnt kann das Halsband einen Kraftmesser umfassen, welcher wiederum das Kraftspeicherelement umfasst.

Für alle Ausführungsformen der vorliegenden Erfindung mit einem Kraftmesser gilt, dass dieser vorzugsweise direkt oder indirekt eine radial auf das Gurtband aufgebrachte Kraft messen soll. Diese Kraft ist also geeignet, das Halsband zu weiten. Das dehnstarre Gurtband leitet diese Kraft wiederum vorzugsweise als eine in Umfangsrichtung wirkende Kraft an den Kraftmesser weiter. Abhängig von der gewählten Bauart kann der Kraftmesser die durch das Gurtband übertragene Kraft direkt messen. Alternativ kann der Kraftmesser als Drehmomentmesser ausgestaltet sein. Da ein Drehmoment stets das Produkt aus Kraft und Hebelarm ist, kann die vom Gurtband weitergeleitete Kraft auch mit einem Drehmomentmesser bestimmt werden, falls der Hebelarm bekannt ist oder ermittelt werden kann.

Der Kraftmesser kann ein Sensor sein. Sensoren zur Kraftmessung sind aus dem Stand der Technik bekannt. Der Sensor kann beispielsweise drahtlos ausgelesen werden. Es kann auch daran gedacht sein, dass der Sensor mit einem Funkmodul verknüpft ist, welches die Sensordaten in vorab festgelegten Intervallen an einen geeigneten Empfänger sendet. Der Landwirt muss in diesem Fall den Auslese-Vorgang nicht selbst anstossen oder vollziehen.

Der Kraftmesser kann alternativ auch eine rein mechanisch arbeitende Kraftmesseinrichtung sein, welche beispielsweise ähnlich dem Prinzip einer Federwaage arbeitet. Eine solche Kraftmesseinrichtung kann eine mechanische Anzeige umfassen, mit deren Hilfe ein Benutzer die gemessene Kraft ablesen kann.

Ein Landwirt kann nun beispielsweise durch Ablesen oder Auslesen des Kraftmessers schnell und zuverlässig erfassen, ob die vom Hals des Rinds auf das Halsband übertragene Kraft so hoch ist, dass das Halsband geweitet werden muss. Hierfür kann das Halsband zweckmässigerweise bekannte Verstelleinrichtungen wie Schnallen oder dergleichen umfassen.

Bei Halsbändern gemäss dem Stand der Technik muss der Landwirt einen Sitz und insbesondere einen Umfang des Halsbands von schnell wachsenden Rindern in kurzen Intervallen manuell prüfen, indem er beispielsweise die Finger zwischen Hals und Halsband schiebt und auf Grund seiner Erfahrung abschätzt, ob das Halsband manuell geweitet werden muss. Dieses Weiten kann beispielsweise ähnliche dem Weiterstellen eines Gürtels mit Hilfe einer entsprechenden Schnalle erfolgen.

Bei einem Halsband gemäss der vorliegenden Erfindung mit dem vorbeschriebenen Kraftmesser kann der Sitz des Halsbands schneller und zuverlässiger durch einfaches Ab- oder Auslesen überprüft werden; ein kurzer Blick genügt. Somit benötigt der Landwirt weniger Zeit, um festzustellen, ob ein manuelles Weiten des Halsbands nötig ist.

Das Halsband kann eine Einrichtung zur Erfassung der auf das Kraftspeicherelement wirkenden Kraft sowie eine Einrichtung zur Übermittlung dieser Kraft umfassen. Es kann sich hierbei um eine elektronische Erfassung handeln.

Die Einrichtung zur Erfassung der Kraft kann ein vorstehend bereits beschriebener Kraftmesser, insbesondere ein Kraftsensor sein. Hierbei können beliebige bekannte Kraftsensoren zum Einsatz kommen, welche beispielsweise auf dem piezoelektrischen oder dem piezoresistiven Effekt beruhen oder mit Dehnmessstreifen arbeiten. Diese Einrichtung zur Erfassung der Kraft umfasst in diesem Fall das bereits erwähnte Kraftspeicherelement, also beispielsweise einen Kristall oder einen Dehnmessstreifen.

Die Einrichtung zur Übermittlung kann insbesondere ein beliebiger Sender, im Allgemeinen eine beliebige Schnittstelle sein, welche geeignet ist, drahtlos Informationen zu übertragen. Eine grosse Vielzahl derartiger Schnittstellen ist bekannt und steht in standardisierter Form zur Verfügung. Hierbei können beliebige Funktechniken zum Einsatz kommen.

Ein Halsband, welches die Einrichtung zur Erfassung und die Einrichtung zur Übermittlung umfasst, kann den Landwirt zielgerichtet informieren, wenn es geweitet werden muss. Zweckmässigerweise wird neben der Information über die erfasste Kraft auch eine Information zur Identifikation des betreffenden Rinds übermittelt, so dass der Landwirt dieses auch schnell auffindet. Die vorstehenden Aufgaben wie beispielsweise Erfassung und Übermittlung der genannten Informationen können auf bekannte Weise beispielsweise mit Hilfe eines Mikrokontrollers realisiert werden.

Das Halsband kann eine Einrichtung zur Längenänderung umfassen, welche wiederum das Kraftspeicherelement umfasst. Die Einrichtung zur Längenänderung kann ein Gehäuse umfassen. Die Einrichtung zur Längenänderung ist vorzugsweise eingerichtet, das Gurtband auszugeben, um eine verfügbare Länge des Gurtbands und somit einen Umfang des Halsbands zu vergrössern. Die Einrichtung zur Längenänderung ist vorzugsweise weiterhin eingerichtet, das Gurtband aufzunehmen, um eine verfügbare Länge des Gurtbands und somit einen Umfang des Halsbands zu verkleinern. Die Einrichtung zur Längenänderung soll also eine reversible Längenänderung des Gurtbands erlauben.

Die Einrichtung zur Längenänderung kann ein nachstehend näher beschriebener Gurtaufroller sein.

Das Halsband kann einen Gurtaufroller umfassen, welcher wiederum das Kraftspeicherelement umfasst. Das grundsätzliche Funktionsprinzip derartiger Gurtaufroller ist von Fenster-Rollläden und insbesondere von PKW-Sicherheitsgurten her bekannt. Derartige Gurtaufroller umfassen eine Rolle, auf welche das Gurtband aufgewickelt werden kann. In dieser Ausführungsform umfasst der Gurtaufroller das Kraftspeicherelement, welches eingerichtet ist, ein Aufrollen des Gurtbands zu bewirken. Das Kraftspeicherelement ist hierfür vorzugsweise so angeordnet, dass es die Rolle mit einer Kraft beaufschlagt, welche ein Drehmoment bewirkt, das wiederum für ein Aufrollen des Gurtbands sorgt.

Im Gegensatz zu den weiter oben beschriebenen Ausführungsbeispielen, welche einen Kraftmesser umfassen, aber keine signifikante Änderung des Halsband-Umfangs zulassen, erlaubt ein solcher Gurtaufroller eine automatische Anpassung des Halsband-Umfangs ohne ein Zutun des Landwirts. Der Gurtaufroller dient also als automatische Verstelleinrichtung für den Halsband-Umfang. In Betriebslage sorgt das Kraftspeicherelement des Gurtaufrollers dafür, dass das Gurtband eng am Hals des Rinds anliegt.

Während das Rind wächst, muss ein Halsband mit Gurtaufroller nicht manuell geweitet werden. Gleichzeitig ist das Halsband verliersicher am Hals des Rinds befestigt.

Es können Gurtaufroller zum Einsatz kommen, welche gleich oder ähnlich gebaut sind, wie die Gurtaufroller von PKW-Sicherheitsgurten.

Das Kraftspeicherelement des Gurtaufrollers kann eine Drehfeder sein.

Aus den vorgenannten Gründen kann bei einem Halsband mit Gurtaufroller auf sämtliche Elemente zur manuellen Anpassung des Halsband-Umfangs, also insbesondere Verstelleinrichtungen wie beispielsweise Schnallen, Verschlüsse und dergleichen verzichtet werden. Optional können diese Elemente zur manuellen Anpassung jedoch zusätzlich zum Gurtaufroller vorhanden sein.

Die Zugkraft, mit welcher bekannte Gurtaufroller für PKW-Sicherheitsgurte die Gurtbänder dieser Sicherheitsgurte beaufschlagen, ist auch für die Anwendung im Rahmen der vorliegenden Erfindung geeignet.

Wie die von PKW-Sicherheitsgurten her bekannten Gurtaufroller kann auch der im Halsband eingebaute Gurtaufroller eine Gurtsperre umfassen. Diese kann mit der Rolle in Wirkverbindung stehen und eingerichtet sein, um bei Überschreiten einer voreingestellten Fliehkraft die Drehbewegung der Rolle zu stoppen. Auf diese Weise kann ein Landwirt dem Rind das Halsband mit Gurtaufroller analog dem Anlegen eines PKW-Sicherheitsgurts anlegen. Hierfür wird er das Halsband vor dem Anlegen händisch langsam und ohne ruckartige Bewegungen weiten. Versucht das mit dem Halsband ausgestattete Rind dieses jedoch durch ruckartige Halsbewegungen an einem Zaun, Ast oder dergleichen abzustreifen, blockiert die Gurtsperre.

Auf dem Gurtband kann eine optische Markierung angebracht sein, welche eine Information betreffend einen Umfang des Halsbands enthält. Vorzugsweise ist auf dem Gurtband nicht nur eine einzige Markierung, beispielsweise in Form einer einzigen Zahl angebracht. Stattdessen umfasst das Gurtband vorzugsweise eine Vielzahl an Markierungen, was nachstehend erläutert wird. Der Einfachheit halber wird dennoch vorwiegend von "Markierung" oder "Information" im Singular gesprochen, wobei selbstverständlich auch "Markierungen" und "Informationen" mit umfasst sein sollen.

Diese Markierung kann so beschaffen sein, dass sie mit dem menschlichen Auge ablesbar ist, also beispielsweise Zeichen, insbesondere Ziffern, oder eine Farbmarkierung umfassen. Die Markierung kann ferner für ein maschinelles optisches Auslesen, also eine Bilderfassung oder dergleichen, optimiert sein. Hierbei kann beispielsweise an einen QR-Code oder an einen Barcode gedacht sein. Selbstverständlich können auch Farbmarkierungen oder Zahlen, beispielsweise mit Hilfe einer Bilderkennung, maschinell ausgelesen werden.

Die Markierung kann unmittelbar den Umfang des Halsbands, beispielsweise in Form einer Längenskala, z.B. in Zentimetern anzeigen. Der Umfang des Halsbands entspricht bei einem eng anliegenden Halsband dem Halsumfang des Rinds. Somit kann anhand des Halsumfangs das Wachstum des Rinds erfasst und überwacht werden. Dieses Erfassen kann automatisiert mittels Bilderkennung oder durch einen Benutzer, also mit dem menschlichen Auge erfolgen. Das Halsband umfassend ein mit einer Zentimeter-Markierung versehenes Gurtband ähnelt somit bekannten Rollmetern, welche aus einem Gehäuse bestehen, in dem ein Massband aufgewickelt wird.

Anstelle von Zentimeter-Angaben oder einem anderen Längenmass kann das Gurtband eine Farbmarkierung enthalten. Üblicherweise ist bekannt, welchen Halsumfang ein gesundes Rind eines bestimmten Alters haben sollte. Dieser Umfang könnte beispielsweise mit einer grünen Markierung auf dem Gurtband gekennzeichnet sein. Neben dieser grünen Markierung können sich entsprechend einem Ampelsystem gelb und/oder rot markierte Abschnitte befinden. Ist das Rind über- oder untergewichtig, so wird sich dies im Halsumfang widerspiegeln, was wiederum auf einfachste Weise durch die Farbmarkierung am Gurtband ablesbar ist.

Wenn die Markierung ein Längenmass auf dem Gurtband ist, kann daran gedacht sein, dass dieses Längenmass beschaffen ist, um den Gesamtumfang des Halsbands - und bei ausreichend engem Anliegen somit auch den Halsumfang des Rinds - anzugeben. Es kann aber auch daran gedacht sein, dass das Längenmass bzw. die Skala anders ausgestaltet ist. Sie könnte beispielsweise die Abweichung von einem bestimmten Umfang anzeigen.

Ist eine Schnalle vorhanden, so wird der Benutzer abhängig von einer Positionierung bzw. Einstellung dieser Schnalle die abgelesene Länge korrigieren. Wird das Halsband mit Hilfe einer Schnalle geweitet, so wird der Benutzer zu der Länge, welche er an der Markierung abliest, einen entsprechenden Betrag hinzuaddieren, um den Umfang des Halsbands zu bestimmen. Konkret kann beispielsweise daran gedacht sein, einen Lochabstand eines entsprechenden Schnallen-Verschlusses bereitzustellen, beispielsweise auf dem Verschluss aufzudrucken oder in diesen einzuprägen. So kann der Benutzer die Länge auf dem Gurtband ablesen und diese entsprechend der aufgedruckten oder eingeprägten Werte korrigieren.

Anstelle der vorbeschriebenen passiven Markierungen kann auch eine Leuchtanzeige, beispielsweise in Form einer oder mehrerer LED vorgesehen sein, welche bei Erreichen eines vorbestimmten Halsumfangs aufleuchten. Hierfür kann beispielsweise das Kraftspeicherelement eingerichtet sein, um bei Erreichen oder Überschreiten einer vorbestimmten Dehnung einen elektrischen Kontakt herzustellen, woraufhin beispielsweise eine LED zu leuchten beginnt.

Ferner kann gemäss einem Ausführungsbeispiel daran gedacht sein, dass das Auf- und Abrollen des Gurtbands nur eine Umfangsänderung in gewissen, meist engen Grenzen zulässt, und das Halsband zusätzlich zum Gurtaufroller eine Verstelleinrichtung zur Verstellung des Halsband-Umfangs aufweist. Während des Wachstums wird ein solches Halsband ein- oder mehrmals manuell geweitet. Die Verstelleinrichtung kann beispielsweise eine Schnalle, einen Verschluss oder dergleichen umfassen. Das Gurtband und der Gurtaufroller könnten so miteinander verbunden sein, dass die Länge des Gurtbands sich nur um wenige Zentimeter verändern lässt. Dies ermöglicht ein automatisches "Mitwachsen" des Halsbands nur in engen Grenzen über einige Tage oder Wochen. Ein solches Halsband ist also flexibler als ein dehnstarres Halsband, dessen Umfang ausschliesslich über einen Verschluss oder dergleichen anpassbar ist. Gleichzeitig kann das Rind das vorbeschriebene Halsband wegen der sehr begrenzten maximalen Umfangsänderung nicht abstreifen. Die geringe maximale Umfangsänderung durch den Gurtaufroller reicht nicht aus, um das Halsband über den Kopf zu ziehen und so abzustreifen. Das Gurtband eines solchen Halsbands könnte eine Farbmarkierung umfassen, welche lediglich anzeigt, dass der Halsumfang des Rinds bald zu gross wird, und der Landwirt das Halsband mit Hilfe der Schnalle oder des Verschlusses weiten muss.

Gemäss einem weiteren Ausführungsbeispiel kann daran gedacht sein, auf dem Gurtband verschiedene Bereiche zu markieren, welche jeweils dem Halsumfang eines gesunden Rinds in einem bestimmten Alter entsprechen. Im einfachsten Fall würden auf dem Halsband also anstelle von Längenangaben oder Farbmarkierungen Altersangaben in Monaten oder Wochen stehen. Diese können abgelesen und mit dem tatsächlichen Alter des Rinds vergleichen werden, um zu überprüfen, ob das Halswachstum altersgerecht ist.

Alle vorgenannten Informationen können durch das menschliche Auge oder mittels Bilderkennung erfasst und ausgewertet werden. Kommt eine Bilderkennung zum Einsatz, so kann ein hierfür nötiger optischer Sensor, beispielsweise eine Kamera, direkt mit dem Halsband verbunden sein. Vorzugsweise werden jedoch optische Sensoren genutzt, welche beispielsweise in einem Stall oder an einer Tränkestation fest installiert sind. Diese optischen Sensoren können die Rinder beispielsweise über Erkennung einer Ohrmarke identifizieren und die Information auf dem Gurtband erfassen. Beide Informationen werden dann miteinander verknüpft und können weiterverarbeitet werden. Das vorbeschriebene System umfassend Halsband und optischen Sensor soll ebenfalls von der vorliegenden Erfindung umfasst sein.

Das Halsband kann eine Einrichtung zur Erfassung des Halsband-Umfangs umfassen. Diese Einrichtung kann eine elektronische Einrichtung sein. Vorzugsweise umfasst das Halsband ferner eine Einrichtung zur Übermittlung des Halsband-Umfangs. Diese Einrichtung zur Erfassung des Halsband-Umfangs kann alternativ oder zusätzlich zur optischen Markierung vorhanden sein.

Umfasst das Halsband wie in der vorbeschriebenen Ausführungsform eine elektronische Einrichtung, so ist ferner eine entsprechende Energieversorgung vorgesehen, welche auch in das Halsband integriert sein kann. Hierbei kann es sich um eine Batterie oder einen Akkumulator handeln, oder auch um eine Einrichtung zum "energy harvesting" (teilweise "Nanogenerator" genannt). Dies gilt natürlich für sämtliche Ausführungsformen der vorliegenden Erfindung, welche eine Energieversorgung benötigen.

Die vorgenannte Einrichtung zur Erfassung kann beispielsweise eine maschinenlesbare Markierung auf dem Gurtband oder eine Winkelstellung und/oder Umdrehungs-Zahl der Rolle erfassen. Hierbei ist zu berücksichtigen, dass die Umdrehungs-Zahl und die Winkelstellung nicht linear von der Länge des ausgegebenen Teils des Gurtbands abhängen. Ist nur wenig oder gar kein Teil des Gurtbands auf der Rolle aufgewickelt, so entspricht eine Umdrehung der Rolle einem kürzeren Abschnitt des Gurtbands, als wenn ein sehr grosser Teil des Gurtbands bereits auf der Rolle aufgewickelt ist.

Alternativ kann auch eine mit dem Gurtband in Kontakt tretende Walze vorgesehen sein, deren Umdrehungen gezählt werden, um auf den Halsband-Umfang zu schliessen.

Oftmals als "Funketiketten" bezeichnete RFID-Transponder können als maschinenlesbare Markierung in dem Gurtband oder auf dem Gurtband eingesetzt werden. Sie sind verschmutzungs-sicher und robust. Das Gurtband kann also mit einem RFID-Transponder, vorzugsweise mit einer Vielzahl von RFID-Transpondern ausgestattet sein, welche jeweils einen bestimmten Halsband-Umfang codieren. Zusätzlich oder alternativ zu einer Längen-Skala wird die Gurtband-Länge und somit der Halsband-Umfang also mit Hilfe von RFID-Transpondern in oder auf dem Gurtband erfasst. Das Halsband umfasst dann zweckmässigerweise ein RFID-Lesegerät zum Auslesen der RFID-Transponder.

Alternative maschinenlesbare Markierungen im Gurtband sind denkbar.

Alternativ oder zusätzlich zu maschinenlesbaren Markierungen in oder auf dem Gurtband kann beispielsweise ein Drehwinkelsensor zum Einsatz kommen, der die Winkelstellung und vorzugsweise weiterhin die seit dem Anlegen des Halsbands absolvierten Umdrehungen der Rolle erfasst. Mit diesen Angaben kann direkt auf den Halsband-Umfang rückgeschlossen werden, da sich dessen Länge und Umfang allein durch Auf- und Abwickeln des Gurtbands auf dem Gurtaufroller ändert, so lange es eng am Hals des Rinds anliegt.

Die Einrichtung zur Übermittlung des Halsband-Umfangs kann insbesondere ein beliebiger Sender, im Allgemeinen eine beliebige Schnittstelle sein, welche geeignet ist, drahtlos Informationen zu übertragen. Eine grosse Vielzahl derartiger Schnittstellen ist bekannt und steht in standardisierter Form zur Verfügung. Es können beliebige Funktechniken zum Einsatz kommen.

Umfasst das Halsband mit Gurtaufroller die vorbeschriebenen Einrichtungen zur Erfassung und Übermittlung des Halsband-Umfangs, so muss der Landwirt das Halsband während des Wachstums nicht manuell vergrössern. Gleichzeitig erhält er ohne jeglichen Aufwand Informationen über das Wachstum des Rinds. Zweckmässigerweise kann daran gedacht sein, nicht nur den Halsband-Umfang als separate Information zu übermitteln, sondern diesen mit Daten zu verknüpfen, welche eine Identifizierung des Rinds erlauben. Die vorstehenden Aufgaben wie beispielsweise Erfassung und Übermittlung der genannten Informationen können auf bekannte Weise beispielsweise mit Hilfe eines Mikrokontrollers realisiert werden.

Neben den zahlreichen Ausführungsformen des Halsbands umfasst die vorliegende Erfindung auch ein Verfahren zum Überwachen des Wachstums eines Rinds. Die vorstehend mit Hinblick auf das Halsband beschriebenen Merkmale können auch beim nachstehend beschriebenen Verfahren zur Anwendung kommen und umgekehrt.

Bei dem vorgenannten Verfahren wird eine vom Hals des Rinds auf das Halsband übertragene Kraft oder eine durch diese Kraft bewirkte Umfangsänderung des Halsbands erfasst.

Zur Durchführung des Verfahrens können sämtliche vorbeschriebenen Ausführungsformen von erfindungsgemässen Halsbändern eingesetzt werden.

Die auf das Halsband übertragene Kraft kann beispielsweise mit Hilfe des im Hinblick auf das Halsband beschriebenen Kraftmesser erfasst werden. Die Umfangsänderung kann mit Hilfe von zumindest einer Markierung erfasst werden.

Es ist ferner denkbar, dass das Halsband zumindest einen Sensor umfasst, um zumindest einen physiologischen Parameter zu erfassen.

Physiologische Parameter sind im Rahmen der vorliegenden Erfindung beispielsweise Vitalparameter.

Vitalparameter sind beispielsweise Herzfrequenz, Körpertemperatur und Atemfrequenz. Es kann auch an zumindest einen Sensor zur Aufzeichnung eines Elektrokardiogramms gedacht sein.

Es kann auch an zumindest einen Sensor gedacht sein, der einen oder mehrere andere physiologische Parameter erfasst, die nicht als Vitalparameter anzusehen sind.

Hierbei kann beispielsweise an zumindest ein Sensor zur Messung der Impedanz gedacht sein. Derartige Sensoren sind von der bioelektrischen Impedanzanalyse her bekannt und lassen beispielsweise Rückschlüsse zu auf den Anteil an Körperzellmasse, Muskelmasse, Körperwasser und Fettmasse des untersuchten Organismus.

Ferner kann an zumindest ein Mikrofon gedacht sein, welches beispielsweise Kaugeräusche erfassen und somit feststellen kann, ob das untersuchte Rind sich bereits vom funktionellen Monogastrier zum Wiederkäuer entwickelt hat.

Es kann auch an Sensoren zur Überwachung einer Schwangerschaft und / oder der Wehentätigkeit gedacht sein.

Insgesamt kommen vorzugsweise Sensoren zum Einsatz, welche einen engen Kontakt zum Fell und/oder der Haut des Rinds benötigen, um optimal zu funktionieren. Das erfindungsgemässe Kraftspeicherelement sorgt für ein enges Anliegen des Gurtbands. An diesem Gurtband können somit einer oder mehrere der vorstehend beschriebenen Sensoren angebracht sein, wobei das Kraftspeicherelement gewährleistet, dass diese Sensoren eng am Fell und/oder an der Haut anliegen.

### Figurenbeschreibung

Weitere Vorteile, Merkmale und Einzelheiten der Erfindung ergeben sich aus der nachfolgenden Beschreibung zweier schematisch dargestellter Ausführungsformen sowie anhand der korrespondierenden Zeichnungen; diese zeigen in den Figuren 1 und 2 ein Halsband 1 mit Gurtaufroller 9 ohne Schnalle sowie in den Figuren 3 und 4 ein Halsband 1 mit Schnalle 10 ohne Gurtaufroller.

### Ausführungsbeispiel

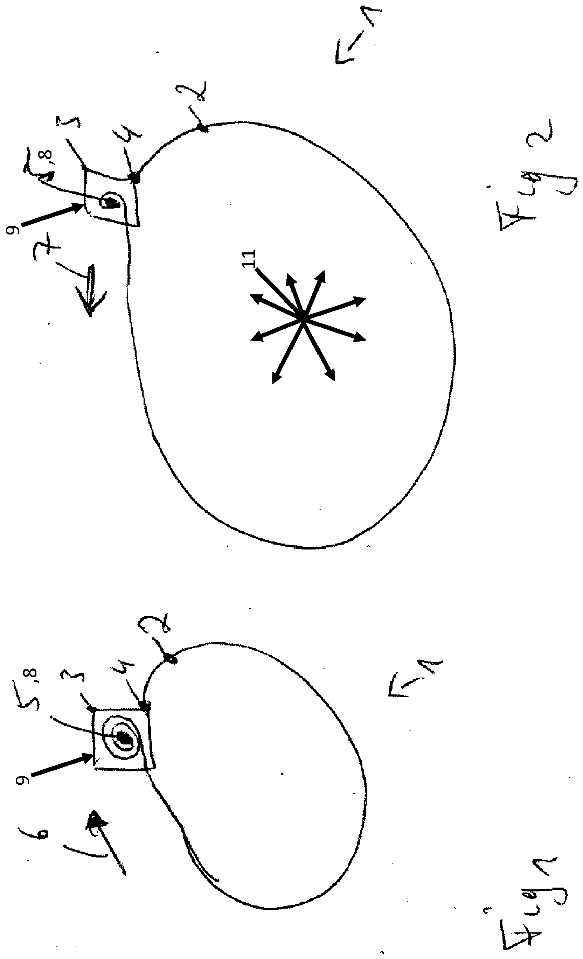

In den Figuren 1 und 2 ist eine erste Ausführungsform eines Halsbands 1 mit Gurtaufroller 9 dargestellt. Ferner sind ein Gurtband 2, ein Gehäuse 3, eine Verbindungsstelle 4 und eine Rolle 5 des Gurtaufrollers 9 erkennbar.

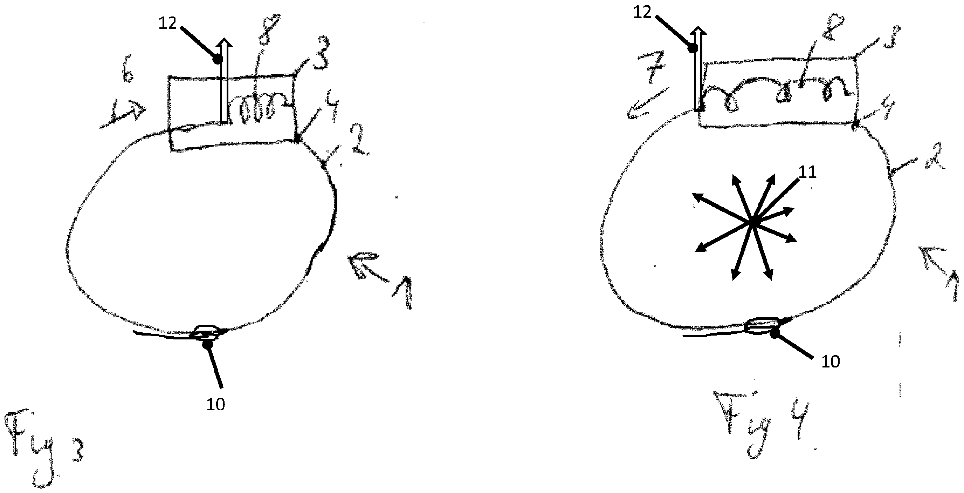

In den Figuren 3 und 4 ist eine zweite Ausführungsform eines Halsbands 1 mit Schnalle 10 dargestellt. Ferner sind ein Gurtband 2, eine Verbindungsstelle 4 sowie ein Gehäuse 3 und ein Anzeigeelement 12 erkennbar. Im Gehäuse 3 befindet sich ein Kraftspeicherelement 8.

Bezugnehmend auf die Figuren 1 bis 4 erklärt sich die Funktionsweise der Halsbänder 1 folgendermassen:
Die Gurtbänder 2 beider Ausführungsformen sind an einem Ende über eine Verbindungsstelle 4 mit dem Gehäuse 3 verbunden. Ein gegenüberliegendes Ende des Gurtbands 2 wird in das Gehäuse 3 geführt. Dieses Ende des Gurtbands 2 ist entweder mit der Rolle 5 oder dem Kraftspeicherelement 8 verbunden. Die Rolle 5 umfasst ebenfalls ein Kraftspeicherelement 8.

Wirkt keine Kraft auf das Halsband 1 und insbesondere auf das Gurtband 2, so wird das Gurtband 2 durch die Kraft des Kraftspeicherelements 8 in Richtung eines Pfeils 6 in das Gehäuse 3 hineingezogen.

In der ersten Ausführungsform kann hierbei ein Gurtband-Abschnitt von signifikanter Länge im Gurtaufroller 9 aufgerollt werden, was in Figur 1 angedeutet ist.

In der zweiten Ausführungsform wird im unbelasteten Zustand, wenn das Halsband 1 sich also nicht am Hals des Rinds befindet, nur ein kleines Stück des Gurtbands 2 in Richtung eines Pfeils 6 in das Gehäuse 3 hineingezogen, was in Figur 3 angedeutet ist.

Um einem Rind das Halsband 1 gemäss Figur 1 anzulegen, wird das Gurtband 2 in Richtung des in Figur 2 gezeigten Pfeils 7 aus dem Gurtaufroller 9 herausgezogen. Durch die vom Kraftspeicherelement 8 und somit der Rolle 5 auf das Gurtband 2 übertragene Kraft wird dieses anschliessend wieder in das Gehäuse 3 zurückgezogen, bis es eng am Hals des Rinds anliegt.

Um einem Rind das Halsband 1 gemäss Figur 3 anzulegen, wird die Schnalle 10 geöffnet und nach dem Anlegen um den Hals des Rinds wieder verschlossen.

Bei der ersten Ausführungsform des Halsbands 1 bewirkt eine durch Pfeile 11 schematisch dargestellter radial auf das Gurtband 2 wirkende Kraft durch den (wachsenden) Hals des wachsenden Rinds (nicht dargestellt) einen Vorschub des Gurtbands 2 in Richtung des Pfeils 7 in Figur 2. Das Halsband 1 wächst also mit, indem die Länge des Gurtbands 2 und damit der Umfang des Halsbands 1 sich automatisch an die Kraft (Pfeile 11) anpasst. Da das Kraftspeicherelement 8 das Gurtband 2 mit einer in Richtung des Pfeils 6 wirkenden Kraft beaufschlagt, wird das Gurtband 2 durch die Kraft (Pfeile 11) des Halses nur soweit in Richtung des Pfeils 7 aus dem Gurtaufroller 9 abgewickelt, dass es stets eng am Hals des Rinds anliegt.

Die vorstehend erwähnte "Länge" des Gurtbands 2 meint stets die Länge des ausserhalb des Gurtaufrollers 9 befindlichen Abschnitts des Gurtbands 2.

Bei der zweiten Ausführungsform des Halsbands 1 bewirkt diese ebenfalls durch Pfeile 11 in Figur 4 dargestellte Kraft nur einen sehr kleinen Vorschub des Gurtbands 2 in Richtung des Pfeils 7 in Figur 4. Das Gurtband 2 liegt weiterhin eng am Hals an. Eine Stellung des Anzeigeelements 12 (bspw. in Bezug auf eine nicht dargestellte Skala) korreliert mit der Auslenkung des als Spiralfeder ausgeführten Kraftspeicherelements 8, welche wiederum mit der radial wirkenden Kraft 11 korrespondiert. Am Anzeigeelement 12 lässt sich unmittelbar ablesen, ob das Halsband 1 mit Hilfe der Schnalle 10 geweitet werden muss.

Obwohl nur zwei Ausführungsformen der Erfindung beschrieben und dargestellt wurden, ist es offensichtlich, dass der Fachmann zahlreiche Modifikationen hinzufügen kann, ohne Wesen und Umfang der Erfindung zu verlassen. Zahlreicher Modifikationen wurden bereits im Abschnitt "Lösung der Aufgabe beschrieben", weshalb nachstehend nur einzelne Modifikationen kurz erwähnt werden.

Die in den Figuren 1 und 2 dargestellte Ausführungsform kann auch eine Schnalle oder dergleichen umfassen. Ferner kann dieser Ausführungsform auch einen Kraftmesser oder dergleichen umfassen.

Bei der in den Figuren 3 und 4 dargestellten Ausführungsform kann auf das Anzeigeelement 12 verzichtet werden. Diese Variante kann auch so beschaffen sein, dass die radial wirkende Kraft 11 einen gewissen Vorschub des Gurtbands 2 in Richtung des Pfeils 7 bewirkt. Dieser Vorschub, d.h. ein Abwickeln bzw. Herausfahren des im Gehäuse 3 befindlichen Abschnitts des Gurtbands 2 kann aber so begrenzt sein, dass das Halsband 1 bei maximal wirkender Kraft 11 dennoch nicht über den Kopf des Rinds (nicht gezeigt) abgestreift werden kann. Diese Modifikation ermöglicht einerseits ein Mitwachsen des Halsbands 1 in gewissen Grenzen und ist andererseits verliersicher am Hals des Rinds festgelegt.

Anstelle des Anzeigeelements 12 kann eine andere Einrichtung zur Erfassung der auf das Kraftspeicherelement 8 wirkenden Kraft angedacht sein. Eine solche Einrichtung kann auch in der Ausführungsform gemäss den Figuren 1 und 2 zum Einsatz. Diese Einrichtung kann im Allgemeinen die in Richtung des Pfeils 7 wirkende Kraft erfassen, mit welcher das Gurtband 2 beaufschlagt ist. Diese Kraft kann, je nach Bauart, im Inneren des Gehäuses eine Kraft oder ein Drehmoment bewirken. So dürfte die Rolle 5 mit einem Drehmoment beaufschlagt werden.

Das Gurtband 2 kann in allen gezeigten Ausführungsformen eine optische Markierung umfassen, welche ein Ablesen einer Information betreffend einen Umfang des Halsbands 1 erlaubt.

Das Halsband 1 kann eine Einrichtung zur Erfassung des Halsband-Umfangs und eine Einrichtung zur Übermittlung des Halsband-Umfangs umfassen.

**Bezugszeichenliste**

| | | | | | |
|---|---|---|---|---|---|
| 1 | Halsband | 34 | | | |
| 2 | Gurtband | 35 | | | |
| 3 | Gehäuse | 36 | | | |
| 4 | Verbindungsstelle | 37 | | | |
| 5 | Rolle | 38 | | | |
| 6 | Pfeil | 39 | | | |
| 7 | Pfeil | 40 | | | |
| 8 | Kraftspeicherelement | 41 | | | |
| 9 | Gurtaufroller | 42 | | | |
| 10 | Schnalle | 43 | | | |
| 11 | Kraft | 44 | | | |
| 12 | Anzeigeelement | 45 | | | |
| 13 | | 46 | | | |
| 14 | | 47 | | | |
| 15 | | 48 | | | |
| 16 | | 49 | | | |
| 17 | | 50 | | | |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Halsband (1) für Rinder umfassend
ein im Wesentlichen dehnstarres Gurtband (2) sowie
ein Kraftspeicherelement (8), welches mit dem Gurtband (2) verbunden ist,
wobei das Kraftspeicherelement (8) eingerichtet ist, einer Vergrösserung eines Halsband-Umfangs entgegenzuwirken.

2. Halsband (1) gemäss Anspruch 1, **gekennzeichnet durch** einen Kraftmesser, wobei der Kraftmesser das Kraftspeicherelement (8) umfasst.

3. Halsband (1) nach einem der Ansprüche 1 oder 2, **gekennzeichnet durch** eine Einrichtung zur Erfassung der auf das Kraftspeicherelement (8) wirkenden Kraft sowie durch eine Einrichtung zur Übermittlung dieser Kraft.

4. Halsband (1) nach Anspruch 1, **gekennzeichnet durch** eine Einrichtung zur Längenänderung (9), wobei diese Einrichtung (9) das Kraftspeicherelement (8) umfasst.

5. Halsband (1) gemäss Anspruch 4, **gekennzeichnet durch** einen Gurtaufroller (9) als Einrichtung zur Längenänderung (9).

6. Halsband (1) gemäss einem der Ansprüche 4 oder 5, **gekennzeichnet durch** zumindest eine auf dem Gurtband (2) angebrachte optische Markierung, welche ein Ablesen einer Information betreffend einen Umfang des Halsbands (1) erlaubt.

7. Halsband (1) gemäss zumindest einem der Ansprüche 4 oder 5, **gekennzeichnet durch** eine Einrichtung zur Erfassung des Halsband-Umfangs sowie durch eine Einrichtung zur Übermittlung des Halsband-Umfangs.

8. Halsband (1) gemäss zumindest einem der vorstehenden Ansprüche, **gekennzeichnet durch** zumindest einen Sensor zur Erfassung zumindest eines physiologischen Parameters.

9. Verfahren zum Überwachen des Wachstums eines Rinds, wobei eine vom Hals des Rinds auf ein Halsband (1) übertragene Kraft oder eine durch diese Kraft bewirkte Umfangsänderung des Halsbands (1) erfasst wird.

10. Verfahren nach Anspruch 9, wobei ein Halsband (1) gemäss einem der Ansprüche 1 bis 7 verwendet wird.
